(19) Europäisches Patentamt
European Patent Office
Office européen des brevets

(11) **EP 4 383 282 A1**

(12) **EUROPEAN PATENT APPLICATION**
published in accordance with Art. 153(4) EPC

(43) Date of publication:
**12.06.2024 Bulletin 2024/24**

(21) Application number: **22853196.8**

(22) Date of filing: **05.08.2022**

(51) International Patent Classification (IPC):
*H01B 13/00* (2006.01)   *C01B 25/14* (2006.01)
*H01B 1/06* (2006.01)   *H01B 1/10* (2006.01)

(52) Cooperative Patent Classification (CPC):
**C01B 25/14; H01B 1/06; H01B 1/10; H01B 13/00;**
Y02E 60/10

(86) International application number:
**PCT/JP2022/030186**

(87) International publication number:
**WO 2023/013778 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 JP 2021130261**

(71) Applicant: **Idemitsu Kosan Co.,Ltd.**
**Tokyo 100-8321 (JP)**

(72) Inventors:
• **SHIBATA, Masayuki**
  **Tokyo 100-8321 (JP)**
• **SHIMADA, Shogo**
  **Tokyo 100-8321 (JP)**
• **KITAMURA, Yuma**
  **Tokyo 100-8321 (JP)**

(74) Representative: **Vossius & Partner**
**Patentanwälte Rechtsanwälte mbB**
**Siebertstrasse 3**
**81675 München (DE)**

(54) **PRODUCTION METHOD FOR SULFIDE SOLID ELECTROLYTE AND SULFIDE SOLID ELECTROLYTE**

(57) A method of producing a sulfide solid electrolyte having high ionic conductivity and high thermal stability without complicating the production process is provided, by a method of producing a sulfide solid electrolyte containing: mixing a raw material inclusion containing at least one type selected from a lithium atom, a sulfur atom, and a phosphorus atom, and a complexing agent having 2 or more of hetero atoms in the molecule to obtain an electrolyte precursor; mixing the electrolyte precursor in a solvent containing an oxygen atom-containing compound having a relative permittivity of 3.2 or higher at 25 °C; obtaining a grinding treatment product by performing grinding treatment of the mixture; and removing the solvent from the grinding treatment product to obtain a sulfide solid electrolyte.

EP 4 383 282 A1

**Description**

Technical Field

The present invention relates to a method of producing a sulfide solid electrolyte and a sulfide solid electrolyte.

Background Art

With rapid spread of information-related instruments, communication instruments, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of batteries having a solid electrolyte layer in place of an electrolytic solution is being made in view of the fact that by making the battery fully solid, simplification of a safety unit may be realized without using a flammable organic solvent within the battery, and the battery is excellent in manufacturing costs and productivity.

Regarding a method of producing a solid electrolyte to be used for a solid electrolyte layer, small particle size is desired from the viewpoint of the performance and the productivity of all-solid-state lithium batteries. In an all-solid-state lithium battery, the positive electrode material, the negative electrode material and the electrolyte are all solid, and accordingly when the particle size of the solid electrolyte is small, the contact interface between the active material and the solid electrolyte is easy to form, which therefore provides an advantage of good ionic conduction paths and electronic conduction paths. As a method for particle size reduction (pulverization), for example, disclosed is a production method that includes a process of adding an ether compound to a coarse particle material of a sulfide solid electrolyte material followed by a process of pulverization by a grinding treatment (for example, see PTLs 1, and 2).

Also, as a method of producing a solid electrolyte, a liquid-phase method attracts attention as a method of simple and mass-scale synthesis. However, in a liquid-phase method, it is difficult to precipitate a solid electrolyte with maintaining the dispersion state of atoms to constitute it, and therefore disclosed is a method for production of a solid electrolyte via an electrolyte precursor further using a complexing agent (for example, see PTLs 3 and 4).

Citation List

Patent Literature

PTL 1: JP 2013-20894 A
PTL 2: JP 2017-100907 A
PLT 3: WO 2020/105736
PLT 4: WO 2020/105737

Summary of Invention

Technical Problem

In view of the above-mentioned circumstances, the present invention has been made, and an object thereof is to provide a method of producing a sulfide solid electrolyte having high ionic conductivity and high thermal stability without complicating the production process.

Solution to Problem

A method of producing a crystalline sulfide solid electrolyte of the present invention contains:

mixing a raw material inclusion containing a lithium atom, a sulfur atom, a phosphorus atom, and a halogen atom, and a complexing agent having 2 or more of hetero atoms in the molecule to obtain an electrolyte precursor;
performing grinding treatment of the electrolyte precursor in a solvent containing an oxygen atom-containing compound having a relative permittivity of 3.2 or higher at 25 °C to
obtain a grinding treatment product; and
removing the solvent from the grinding treatment product to obtain a sulfide solid electrolyte.

Advantageous Effects of Invention

According to the present invention, a sulfide solid electrolyte having high ionic conductivity and high thermal stability without complicating the production process, can be provided.

Brief Description of Drawings

Fig. 1 is a DTA curve of an amorphous solid electrolyte obtained by Example 1.
Fig. 2 is a DTA curve of an amorphous solid electrolyte obtained by Comparative example 3.
Fig. 3 is a DTA curve of a crystalline solid electrolyte obtained by Example 1.
Fig. 4 is a DTA curve of a crystalline solid electrolyte obtained by Comparative example 3.

Description of Embodiments

Embodiments of the present invention (hereinafter, sometimes referred to as "present embodiment") are hereunder described. In this description, numerical values of an upper limit and a lower limit according to numerical value ranges of " XX or more", " YY or less", and "XX to YY" are each a numerical value which can be arbitrarily combined, and numerical values in Examples can also be used as numerical values of an upper limit and a lower limit, respectively.

(Knowledge that the inventors obtained for reaching the present invention)

The present inventors have made assiduous studies for solving the above-mentioned problems and, as a result, have found out the following matters and completed the present invention.
In the production methods described in PTLs 1 and 2, a dispersing agent is added when the coarse particles are ground, but since no complexing agent having two or more hetero atoms are used, there are problems such as the difficulty of maintaining the dispersed state of the atoms that constitute the solid electrolyte.
On the other hand, in the production methods described in PTLs 3 and 4, a solid electrolyte is produced using a complexing agent in a liquid phase method, thereby making it possible to maintain the dispersed state of atoms constituting the solid electrolyte, however, the complexing agent having a high affinity for lithium tends to remain in the solid electrolyte and may reduce the ionic conductivity. Further, the crystal structure of the obtained solid electrolyte may continuously change in a high temperature range, resulting in a decrease in the thermal stability such as a phase transition to a phase with lower ionic conductivity.
In view of the above, a method that can efficiently produce a sulfide solid electrolyte having high ionic conductivity and high thermal stability, has been desired.
The present inventors found that the ionic conductivity and the thermal stability can be improved by adding a specific solvent to the electrolyte precursor produced by using a complexing agent to perform grinding treatment, and removing the solvent.
The present embodiment contains performing grinding treatment to the electrolyte precursor in a solvent containing an oxygen atom-containing compound having a relative permittivity of 3.2 or higher at 25°C to produce a grinding treatment product, and further removing the solvent to obtain a sulfide solid electrolyte, and it was found that the sulfide solid electrolyte having high ionic conductivity and thermal stability can be produced.
The present embodiment is extremely excellent production method since the ionic conductivity of the sulfide solid electrolyte is improved simply by performing grinding treatment of the electrolyte precursor in a specific solvent. In the conventional production method using the liquid phase method, the crystal structure of the obtained sulfide solid electrolyte changes continuously as the temperature rises, but in this embodiment, by performing a grinding treatment using a specific solvent, a sulfide solid electrolyte is obtained in which a clear crystallization exothermic peak is confirmed at 270 to 310 °C, indicating a phase transition to a crystalline phase with lower ionic conductivity, in differential thermal analysis (DTA).
Such a sulfide solid electrolyte, in which crystallization exothermic curve can be observed on the higher temperature side, has little change in crystal structure in the temperature range of the crystallization exothermic peak or less, resulting that the decrease in ionic conductivity due to changes in the crystal structure is suppressed, and therefore it is considered to be a sulfide solid electrolyte having good thermal stability.
Hereinunder described is a method of producing a sulfide solid electrolyte of a first mode to an eleventh mode of the present embodiment.
A method of producing a sulfide solid electrolyte of the first mode of the present embodiment is a method of producing a sulfide solid electrolyte containing:

mixing a raw material inclusion containing a lithium atom, a sulfur atom, a phosphorus atom, and a halogen atom, and a complexing agent having 2 or more of hetero atoms in the molecule to obtain an electrolyte precursor; performing grinding treatment of the electrolyte precursor in a solvent containing an oxygen atom-containing compound having a relative permittivity of 3.2 or higher at 25 °C to obtain a grinding treatment product; and removing the solvent from the grinding treatment product to obtain a sulfide solid electrolyte.

In the methods of producing the solid electrolyte described in PTLs 1 and 2, a dispersing agent is added when the coarse particles are ground, but since no complexing agent having two or more hetero atoms are used when mixing the sulfide solid electrolyte materials, there are problems such as the difficulty of maintaining the dispersed state of the atoms that constitute the solid electrolyte, and the obtained solid electrolyte does not have the high ionic conductivity.

Further, the methods of producing the solid electrolyte described in PTLs 3 and 4, a sulfide solid electrolyte obtained by mixing a raw material inclusion containing lithium and the like, and a complexing agent, is crushed and granulated using a bead mill in the presence or absence of a solvent. However, since the predetermined solvent of the present invention was not used, the complexing agent remained inside the solid electrolyte was not removed sufficiently, and the ionic conductivity of the obtained solid electrolyte was not sufficient. Furthermore, the solid electrolyte obtained by using a complexing agent sometimes has a phenomenon in which the crystal structure changes continuously as the temperature rises, and there is a problem in terms of thermal stability.

In contrast, in the present invention, it was found that by performing a grinding treatment of the electrolyte precursor produced using a complexing agent with two or more hetero atoms in a solvent containing an oxygen atom-containing compound having high relative permittivity, the amount of residual complexing agent can be reduced and a solid electrolyte having high ionic conductivity can be produced.

A method of producing a sulfide solid electrolyte of the second mode of the present embodiment is a method of producing a sulfide solid electrolyte according to the first mode, in which the oxygen atom-containing compound is an ether compound.

It is preferable to use an ether compound as the above oxygen atom-containing compound from the viewpoint of removing the complexing agent coordinating to lithium, and improving the ionic conductivity of the solid electrolyte.

A method of producing a sulfide solid electrolyte of the third mode of the present embodiment is a method of producing a sulfide solid electrolyte according to the second mode, in which the ether compound is an aliphatic ether having a carbon number of 1 to 20.

The ether compound which easily removes the complexing agent coordinating to lithium, includes an aliphatic ether having a carbon number of 1 to 20.

A method of producing a sulfide solid electrolyte of the fourth mode of the present embodiment is a method of producing a sulfide solid electrolyte according to any one of the above first to third modes, in which the ether compound is represented by a general formula (1),

$$R^1\text{-O-}R^2 \cdots \qquad (1)$$

(in which, $R^1$ and $R^2$ each independently represents a linear alkyl group having a carbon number of 1 to 20, a branched alkyl group having a carbon number of 3 to 20, or a cycloalkyl group having a carbon number of 5 to 20).

More specifically, it is preferable to use the ether compound represented by the above general formula (1) from the viewpoint of efficiently removing the complexing agent coordinating to lithium.

Furthermore, a method of producing a sulfide solid electrolyte of the fifth mode of the present embodiment is a method of producing a sulfide solid electrolyte according to the above fourth mode, in which $R^1$ and $R^2$ in the general formula (1) are the same groups.

The above described ether compound is preferably a symmetrical ether in which $R^1$ and $R^2$ in general formula (1) are the same groups.

Furthermore, a method of producing a sulfide solid electrolyte of the sixth mode of the present embodiment is a method of producing a sulfide solid electrolyte according to any one of the above first to fifth modes, further containing: heating the electrolyte precursor.

From the viewpoint of further improving ionic conductivity, it is preferable to heat the electrolyte precursor to crystallize it.

A method of producing a sulfide solid electrolyte of the seventh mode of the present embodiment is a method of producing a sulfide solid electrolyte according to any one of the above first to sixth modes, further containing: heating the sulfide solid electrolyte.

The sulfide solid electrolyte is preferably crystallized by heating from the viewpoint of further improving the ionic conductivity.

A method of producing a sulfide solid electrolyte of the eighth mode of the present embodiment is a method of producing a sulfide solid electrolyte according to any one of the above first to seventh modes, in which the complexing agent is a compound having a tertiary amino group.

It is preferable to use a compound having a tertiary amino group as the complexing agent from the viewpoint of improving ionic conductivity, since the complexing agent is easily removed by the oxygen-containing compound.

A method of producing a sulfide solid electrolyte of the ninth mode of the present embodiment is a method of producing a sulfide solid electrolyte according to any one of the above first to eighth modes, in which the solvent further contains a hydrocarbon compound.

It is preferable that the solvent further contains a hydrocarbon compound from the viewpoint of improving ionic conductivity, since the complexing agent and the oxygen-containing compound can be easily removed.

A method of producing a sulfide solid electrolyte of the tenth mode of the present embodiment is a method of producing a sulfide solid electrolyte according to the above ninth mode, in which the solvent contains 50 to 99.5 % by mass of the hydrocarbon compound and 0.5 to 50 % by mass of the oxygen atom-containing compound.

It is preferable that the contents of the hydrocarbon compound and the oxygen atom-containing compound in the solvent are within the above ranges, from the viewpoint of improving ionic conductivity.

A sulfide solid electrolyte of the eleventh mode of the present embodiment is a sulfide solid electrolyte containing:

a lithium atom;
a sulfur atom;
a phosphorus atom; and
a halogen atom,

and containing:

0.1 to 0.9 % by mass of a complexing agent having a number of hetero atoms in the molecule of 2 or more; and
0.01 to 0.5 % by mass of an oxygen atom-containing compound having a relative permittivity at 25 °C of 3.2 or higher.

The sulfide solid electrolyte obtained by the method of producing of the present invention described above contains a very small amount of the above complexing agent and an oxygen atom-containing compound.

A sulfide solid electrolyte of the twelfth mode of the present embodiment is a sulfide solid electrolyte according to the eleventh mode, which exhibits a crystallization exothermic peak at 270 to 310 °C, as measured by differential thermal analysis (DTA).

The sulfide solid electrolyte of the present invention has the little amount of the residual complexing agent of the complexing agent or the oxygen atom-containing compound, however when it exhibits a crystallization exothermic peak at 270 to 310 °C, as measured by differential thermal analysis (DTA), the change in crystal structure in the temperature range below the crystallization exothermic peak is little, resulting that the decrease in ionic conductivity due to changes in the crystal structure is less likely to occur, and therefore it becomes to have good thermal stability.

A sulfide solid electrolyte of the thirteenth mode of the present embodiment is a sulfide solid electrolyte according to the above described eleventh or twelfth mode, in which a specific surface area is 1 to 20 $m^2$/g, and an average particle diameter (D50) is 0.1 to 10 $\mu$m.

When the sulfide solid electrolyte of the present invention has a specific surface area and an average particle diameter within the above range, it is preferred from the viewpoint of reducing the specific surface area of the particle surface of the solid electrolyte and improving the ionic conductivity of the solid electrolyte while facilitating the formation of a contact interface between the active material and the solid electrolyte, resulting in a better path for ion and electron conduction.

Hereinunder the method of producing of the present embodiment is described in more detail with reference to the modes thereof mentioned above.

[Method of Producing Sulfide Solid Electrolyte]

A method of producing a sulfide solid electrolyte of the present embodiment requires for containing:

mixing a raw material inclusion containing a lithium atom, a sulfur atom, a phosphorus atom, and a halogen atom, and a complexing agent having 2 or more of hetero atoms in the molecule to obtain an electrolyte precursor;
performing grinding treatment of the electrolyte precursor in a solvent containing an oxygen atom-containing compound having a relative permittivity of 3.2 or higher at 25 °C to obtain a grinding treatment product; and
removing the solvent from the grinding treatment product to obtain a sulfide solid electrolyte.

<Preparation of Electrolyte Precursor>

"Preparing an electrolyte precursor" in the present embodiment needs to mix a raw material inclusion to be mentioned below and a complexing agent also to be mentioned below. It is preferable since a complex that contains a phosphorus atom and a sulfur atom such as $Li_3PS_4$ can be formed even in a liquid phase method or a heterogeneous method, and a homogeneous solid electrolyte can be obtained with suppressing separation of specific components, by mixing a raw material inclusion and a complexing agent to complex the raw material inclusion.

(Solid Electrolyte)

The "solid electrolyte" as referred to in this description means an electrolyte of keeping the solid state at 25°C in a nitrogen atmosphere. The solid electrolyte in the present embodiment is a solid electrolyte containing a lithium atom, a sulfur atom, a phosphorus atom, and a halogen atom and having an ionic conductivity to be caused owing to the lithium atom.

The "solid electrolyte" includes both a crystalline sulfide solid electrolyte having a crystal structure and an amorphous solid electrolyte.

The crystalline sulfide solid electrolyte as referred to in this description is a material that is a solid electrolyte in which peaks derived from the solid electrolyte are observed in an X-ray diffraction pattern in the X-ray diffractometry, and the presence or absence of peaks derived from the raw materials of the solid electrolyte does not matter. That is, the crystalline sulfide solid electrolyte contains a crystal structure derived from the solid electrolyte, in which a part thereof may be a crystal structure derived from the solid electrolyte, or all of them may be a crystal structure derived from the solid electrolyte. The crystalline sulfide solid electrolyte may be one in which an amorphous solid electrolyte is contained in a part thereof so long as it has the X-ray diffraction pattern as mentioned above. In consequence, in the crystalline sulfide solid electrolyte, a so-called glass ceramics which is obtained by heating the amorphous solid electrolyte to a crystallization temperature or higher is contained.

The amorphous solid electrolyte as referred to in this description is a halo pattern in which any other peak than the peaks derived from the materials is not substantially observed in an X-ray diffraction pattern in the X-ray diffractometry, and it is meant that the presence or absence of peaks derived from the raw materials of the solid electrolyte does not matter.

(Mixing)

The "mixing" of the present embodiment is preferably performed by using a stirrer or a mixer.

The examples of the stirrer and the mixer include, for example, a mechanically stirring-type mixer capable of attaining stirring with a stirring blade arranged inside a reactor (this mode can also be referred to as mixing with stirring, or stirring mixing). The mechanically stirring-type mixer includes a high-speed stirring mixer and a double-arm type mixer. The high-speed stirring type mixer includes a vertical axis rotating type mixer and a lateral axis rotating type mixer, and mixers of any of these types can be used.

Examples of a shape of the stirring blade which is used in the mechanically stirring-type mixer include a blade type, an arm type, an anchor type, a paddle type, a full-zone type, a ribbon type, a multistage blade type, a double arm type, a shovel type, a twin-shaft blade type, a flat blade type, and a C type blade type. From the viewpoint of more efficiently promoting the reaction of the raw materials, preferred are a shovel type, a flat blade type, a C type blade type, an anchor type, a paddle type, a full-zone type and the like; and more preferred are an anchor type, a paddle type, and a full-zone type. In a small-scale production mode, also a Schlenk bottle equipped with a stirrer and a separable flask equipped with a rotor blade are preferably employed.

In the case of using a mechanically stirring-type mixer, the rotation number of the stirring blade can be appropriately controlled with no specific limitation and depending on the volume and the temperature of the fluid in the reactor, on the shape of the stirring blade, and the like, and can be generally approximately 5 rpm or more and 400 rpm or less, but from the viewpoint of more efficiently promoting the reaction of the raw materials, it is preferably 10 rpm or more and 300 rpm or less, more preferably 15 rpm or more and 250 rpm or less, even more preferably 20 rpm or more and 230 rpm or less.

The temperature condition in mixing with a mixer is not specifically limited and is, for example, generally -30 to 120 °C, preferably -10 to 100 °C, more preferably 0 to 80°C, even more preferably 10 to 60 °C. Mixing with no temperature control from the outside is also preferred. The mixing time is generally 0.1 to 500 hours, and from the viewpoint of making the dispersed state of the raw materials more uniform to promote the reaction, it is preferably 1 to 450 hours, more preferably 10 to 425 hours, even more preferably 20 to 400 hours, further more preferably 30 to 300 hours.

(Raw Material Inclusion)

The raw material inclusion for use in the present embodiment needs to contain a lithium atom, a sulfur atom, a phosphorus atom, and a halogen atom.

Examples of the solid electrolyte raw material contained in the raw material inclusion include raw materials composed of at least two kinds of atoms selected from the above four kinds of atoms, such as lithium sulfide; lithium halides, e.g., lithium fluoride, lithium chloride, lithium bromide, and lithium iodide; phosphorus sulfides, e.g., diphosphorus trisulfide ($P_2S_3$) and diphosphorus pentasulfide ($P_2S_5$); phosphorus halides, e.g., various phosphorus fluorides (e.g., $PF_3$ and $PF_5$), various phosphorus chlorides (e.g., $PCl_3$, $PCl_5$, and $P_2Cl_4$), various phosphorus bromides (e.g., $PBr_3$ and $PBr_5$), and various phosphorus iodides (e.g., $PI_3$ and $P_2I_4$); and thiophosphoryl halides, e.g., thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$); as well as halogen simple substances, such as fluorine ($F_2$), chlorine ($Cl_2$), bromine ($Br_2$), and iodine ($I_2$), with bromine ($Br_2$) and iodine ($I_2$) being preferred.

Examples that can be used as the raw material other than those mentioned above include a raw material containing at least one kind of atom selected from the above-mentioned four kinds of atoms, and containing any other atoms, more specifically, lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfide ($SnS$, $SnS_2$), aluminum sulfide, and zinc sulfide; phosphate compounds, such as sodium phosphate and lithium phosphate; halide compounds with an alkali metal other than lithium, such as sodium halides, e.g., sodium iodide, sodium fluoride, sodium chloride, and sodium bromide; metal halides, such as an aluminum halide, a silicon halide, a germanium halide, an arsenic halide, a selenium halide, a tin halogen, an antimony halide, a tellurium halide, and a bismuth halide; and phosphorus oxyhalides, such as phosphorus oxychloride ($POCl_3$) and phosphorus oxybromide ($POBr_3$).

Among the above, phosphorus sulfides, such as lithium sulfide, diphosphorus trifluoride ($P_2S_3$), and diphosphorus pentasulfide ($P_2S_5$); halogen simple substances, such as fluorine ($F_2$), chlorine (Ch), bromine ($Br_2$), and iodine ($I_2$); and lithium halides, such as lithium fluoride, lithium chloride, lithium bromide, and lithium iodide are preferred. In the case where an oxygen atom is introduced into the solid electrolyte, preferred are lithium oxide, lithium hydroxide and a phosphate compound such as lithium phosphate. Preferred examples of a combination of raw materials include a combination of lithium sulfide, diphosphorus pentasulfide, and a lithium halide; and a combination of lithium sulfide, diphosphorus pentasulfide, and a halogen simple substance, in which the lithium halide is preferably lithium bromide or lithium iodide, and the halogen simple substance is preferably bromine or iodine.

In the present embodiment, $Li_3PS_4$ that contains a $PS_4$ structure can be used as a part of the raw material. Specifically, $Li_3PS_4$ is prepared by production or the like in advance and this is used as the raw material.

The content of $Li_3PS_4$ to the total raw material is preferably 60 to 100 mol%, more preferably 65 to 90 mol%, even more preferably 70 to 80 mol%.

In the case where $Li_3PS_4$ and a halogen simple substance are used, the content of the halogen simple substance to $Li_3PS_4$ is preferably 1 to 50 mol%, more preferably 10 to 40 mol%, even more preferably 20 to 30 mol%, further more preferably 22 to 28 mol%.

The lithium sulfide which is used in the present embodiment is preferably particles.

An average particle diameter ($D_{50}$) of the lithium sulfide particles is preferably 10 $\mu$m or more and 2,000 $\mu$m or less, more preferably 30 $\mu$m or more and 1,500 $\mu$m or less, and still more preferably 50 $\mu$m or more and 1,000 $\mu$m or less. In this description, the average particle diameter ($D_{50}$) is a volume average particle diameter to reach 50% of all the particles in sequential cumulation from the smallest particles in drawing the particle diameter distribution cumulative curve on a volume basis, and the volume distribution is concerned with an average particle diameter which can be, for example, measured with a laser diffraction/scattering particle diameter distribution measuring device. In addition, among the above-exemplified raw materials, the solid raw material is preferably a material having an average particle diameter of the same degree as that of the above lithium sulfide particle, namely a material having an average particle diameter falling within the same range as that of the above lithium sulfide particle is preferred.

In the case of using lithium sulfide, diphosphorus pentasulfide, and the lithium halide as the raw materials, from the viewpoint of obtaining higher chemical stability and a higher ionic conductivity, a proportion of lithium sulfide relative to the total of lithium sulfide and diphosphorus pentasulfide is preferably 70 to 80 mol%, more preferably 72 to 78 mol%, and still more preferably 74 to 78 mol%.

In the case of using lithium sulfide, diphosphorus pentasulfide, a lithium halide, and other raw material to be optionally used, the content of lithium sulfide and diphosphorus pentasulfide relative to the total of the above raw materials is preferably 60 to 100 mol%, more preferably 65 to 90 mol%, and still more preferably 70 to 80 mol%.

In the case of using a combination of lithium bromide and lithium iodide as the lithium halide, from the viewpoint of enhancing the ionic conductivity, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the case of using not only a halogen simple substance but also lithium sulfide and diphosphorus pentasulfide as the raw materials, a proportion of the molar number of lithium sulfide excluding lithium sulfide having the same molar number as the molar number of the halogen simple substance relative to the total molar number of lithium sulfide and diphosphorus pentasulfide excluding lithium sulfide having the same molar number as the molar number of the halogen simple substance falls preferably within a range of 60 to 90%, more preferably within a range of 65 to 85%, still more preferably within a range of 68 to 82%, yet still more preferably within a range of 72 to 78%, and even yet still more preferably within a range of 73 to 77%. This is because when the foregoing proportion falls within the above ranges, a higher ionic conductivity is obtained.

In addition, in the case of using lithium sulfide, diphosphorus pentasulfide, and a halogen simple substance, from the same viewpoint, the content of the halogen simple substance relative to the total amount of lithium sulfide, diphosphorus pentasulfide, and the halogen simple substance is preferably 1 to 50 mol%, more preferably 2 to 40 mol%, still more preferably 3 to 25 mol%, and yet still more preferably 3 to 15 mol%.

In the case of using lithium sulfide, diphosphorus pentasulfide, a halogen simple substance, and a lithium halide, the content ($\alpha$ mol%) of the halogen simple substance and the content ($\beta$ mol%) of the lithium halide relative to the total of the above raw materials preferably satisfy the following expression (2), more preferably satisfy the following expression (3), still more preferably satisfy the following expression (4), and yet still more preferably satisfy the following expression (5).

$$2 \leq 2\alpha + \beta \leq 100 \ (2)$$

$$4 \leq 2\alpha + \beta \leq 80 \ (3)$$

$$6 \leq 2\alpha + \beta \leq 50 \ (4)$$

$$6 \leq 2\alpha + \beta \leq 30 \ (5)$$

In the case of using two halogen as simple substances, when the molar number in the substance of the halogen atom of one side is designated as Al, and the molar number in the substance of the halogen atom of the other side is designated as A2, an A1:A2 ratio is preferably 1:99 to 99:1, more preferably 10:90 to 90:10, still more preferably 20:80 to 80:20, and yet still more preferably 30:70 to 70:30.

In the case where the two halogen simple substances are bromine and iodine, when the molar number of bromine is designated as Bl, and the molar number of iodine is designated as B2, a B1:B2 ratio is preferably 1:99 to 99:1, more preferably 15:85 to 90:10, still more preferably 20:80 to 80:20, yet still more preferably 30:70 to 75:25, and especially preferably 35:65 to 75:25.

It is preferably that the raw material mixture is mixed in the form of a slurry with a solvent to be mentioned below when mixing a complexing agent to be mentioned below and the raw material inclusion, since the raw material mixture can form a uniform complex.

(Complexing Agent)

In the present description, the complexing agent is a complexing agent capable of forming a complex containing $Li_3PS_4$ obtained from $Li_2S$, $P_2S_5$ that are preferably used as the raw materials for the solid electrolyte and a halogen atom, preferably having an ability to form $Li_3PS_4$, and capable of forming a complex that contains the formed $Li_3PS_4$ and a halogen atom.

The complexing agent used in the present embodiment may be used alone or in combination of two or more, but it is required that the number of hetero atom in the molecule is two or more. As the complexing agent, a complexing agent capable of forming a complex containing $Li_3PS_4$ and a halogen atom is usually used.

The amount to be added of the complexing agent when performing the mixing of the present embodiment is, from the viewpoint of efficiently forming the complex, preferably such that the molar ratio of the amount added of the complexing agent, with respect to the total molar amount of Li atoms contained in the raw material inclusion, is preferably 0.5 or more and 7.0 or less, more preferably 0.6 or more and 5.5 or less, even more preferably 0.8 or more and 3.5 or less.

The complexing agent used in the present embodiment can be used without any particular restriction as long as it has the above performance and the number of heteroatoms in the molecule is 2 or more, and specifically, compounds containing hetero atoms having high affinity especially with lithium atoms, such as a nitrogen atom, an oxygen atoms, and a chlorine atoms, are preferred, and compounds having groups containing these heteroatoms are more preferred. This is because these hetero atoms and the group containing the hetero atom can coordinate (bond) to lithium.

The hetero atom existing in the molecule of the complexing agent has a high affinity with a lithium atom, and is considered to bond to the raw materials that contain a lithium atom and a halogen atoms such as $Li_3PS_4$ containing a $PS_4$ structure of the main skeleton of the solid electrolyte produced in the present embodiment and a lithium halide, thereby readily forming a complex. Consequently, it is considered that, by mixing the raw materials and the complexing agent, the complex is formed and can be precipitated while keeping the dispersed state of various components even in the precipitation process, and therefore an electrolyte precursor with a halogen atom more uniformly dispersed and fixed therein (hereinunder, one produced by mixing the raw material inclusion containing at least one selected from a lithium atom, a sulfur atom and a phosphorus atom and the complexing agent is also referred to as an electrolyte precursor) can be produced, and as a result, a solid electrolyte having a high ionic conductivity can be produced.

Consequently, the complexing agent needs to contain at least two hetero atoms in the molecule, more preferably has a group containing at least two hetero atoms in the molecule. By having at least two hetero atoms in the molecule of the complexing agent, the raw materials containing lithium and halogen such as $Li_3PS_4$ and a lithium halide can be bonded via the at least two hetero atoms in the molecule. Among the hetero atoms, a nitrogen atom is preferred, and an amino group is preferred as the group containing a nitrogen atom. Specifically, an amine compound is preferred as the complexing agent.

Any amine compound having an amino group in the molecule is employable with no specific limitation since it can promote complex formation, but a compound having at least two amino groups in the molecule is preferred. Having such a structure, the compound can bond the raw materials containing lithium and halogen such as $Li_3PS_4$ and a lithium halide via the at least two nitrogen atoms in the molecule.

Examples of such amine compounds include amine compounds such as an aliphatic amine, an alicyclic amine, a heterocyclic amine and an aromatic amine, and one alone or plural kinds thereof can be used either singly or as combined.

More specifically, representative preferred examples of the aliphatic amine include an aliphatic diamine, such as an aliphatic primary diamine such as ethylenediamine, diaminopropane, and diaminobutane; an aliphatic secondary diamine such as N,N'-dimethylethylenediamine, N,N'-diethylethylenediamine, N,N'-dimethyldiaminopropane, and N,N'-diethyldiaminopropane; and an aliphatic tertiary diamine such as N,N,N',N'-tetramethyldiaminomethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane, and N,N,N',N'-tetramethyldiaminohexane. Here, regarding exemplification in the present description, for example, diaminobutane indicates, unless otherwise specifically noted, all isomers including isomers relating to the position of the amino group such as 1,2-diaminobutane, 1,3-diaminobutane and 1,4-diaminobutane, and in addition thereto, linear and branched isomers relating to butane.

The carbon number of the aliphatic amine is preferably 2 or more, more preferably 4 or more, even more preferably 6 or more, and the upper limit is 10 or less, more preferably 8 or less, even more preferably 7 or less. The carbon number of the aliphatic hydrocarbon group in the aliphatic amine is preferably 2 or more, and the upper limit is preferably 6 or less, more preferably 4 or less, even more preferably 3 or less.

Representative preferred examples of the alicyclic amine include an alicyclic diamine, such as an alicyclic primary diamine such as cyclopropanediamine, and cyclohexanediamine; an alicyclic secondary diamine such as bisaminomethylcyclohexane; and an alicyclic tertiary diamine such as N,N,N',N'-tetramethyl-cyclohexanediamine, and bis(ethylmethylamino)cyclohexane. Representative preferred examples of the heterocyclic amine include a heterocyclic diamine, such as a heterocyclic primary diamine such as isophoronediamine; a heterocyclic secondary diamine such as piperazine, and dipiperidylpropane; and a heterocyclic tertiary diamine such as N,N-dimethylpiperazine, and bismethylpiperidylpropane.

The carbon number of the alicyclic amine and the heterocyclic amine is preferably 3 or more, more preferably 4 or more, and the upper limit is preferably 16 or less, more preferably 14 or less.

Representative preferred examples of the aromatic amine include an aromatic diamine, such as an aromatic primary diamine such as phenyldiamine, triethylenediamine and naphthalenediamine; an aromatic secondary diamine such as N-methylphenylenediamine, N,N'-dimethylphenylenediamine, N,N'-bismethylphenylphenylenediamine, N,N'-dimethylnaphthalenediamine, and N-naphthylethylenediamine; and an aromatic tertiary diamine such as N,N-dimethylphenylenediamine, N,N,N',N'-tetramethylphenylenediamine, N,N,N',N'-tetramethyldiaminodiphenylethane, and N,N,N',N'-tetramethylnaphthalene.

The carbon number of the aromatic amine is preferably 6 or more, more preferably 7 or more, even more preferably 8 or more, and the upper limit is preferably 16 or less, more preferably 14 or less, even more preferably 12 or less.

The amine compound for use in the present embodiment can be substituted with a substituent such as an alkyl group, an alkenyl group, an alkoxy group, a hydroxy group or a cyano group, or a halogen atom.

Diamines are exemplified as specific examples, but needless-to-say, the amine compound for use in the present embodiment is not limited to diamines, and imidazole compounds such as imidazole and methylimidazole, diethylenetriamine, also polyamines having 3 or more amino groups such as diethylenetriamine, N,N',N"-trimethyldiethylenetriamine, N,N,N',N",N"-pentamethyldiethylenetriamine, triethylenetetramine, N,N'-bis[(dimethylamino)ethyl]-N,N'-dimethylethylenediamine, hexamethylenetetramine, and tetraethylenepentamine, can be also used.

Among the above, from the viewpoint of attaining a higher ionic conductivity, preferred is a tertiary amine having a tertiary amino group as the amino group, more preferred is a tertiary diamine having two tertiary amino groups, even more preferred is a tertiary diamine having two tertiary amino groups at both ends, and further more preferred is an aliphatic tertiary diamine having tertiary amino groups at both ends. Of the above-mentioned amine compounds, as the aliphatic tertiary diamine having tertiary amino groups at both ends, preferred are tetramethylethylenediamine, tetraethylethylenediamine, tetramethyldiaminopropane and tetraethyldiaminopropane, and in consideration of easy availability, preferred are tetramethylethylenediamine and tetramethyldiaminopropane.

Compounds having any other group than an amino group, containing a nitrogen atom as a hetero atom, for example, those having a group such as a nitro group or an amide group can also provide the same effects as above.

It is preferable to use a complexing agent having a relative permittivity of less than 3.2 at 25° C, since the complexing agent can easily replace the oxygen atom-containing compound during the grinding treatment described below.

In the present embodiment, when mixing the raw material inclusion and the complexing agent, a complexing agent other than the above-mentioned complexing agent having 2 or more heteroatoms in the molecule may be added.

(Solvent)

In the present embodiment, a solvent can be further added in mixing the raw material inclusion and the complexing agent.

In forming a complex that is solid in the complexing agent that is liquid, when the complex can readily dissolve in the complexing agent, component separation may occur. Accordingly, by using a solvent that does not dissolve the complex, dissolution of the component in the electrolyte precursor can be prevented. In addition, by mixing the raw material inclusion and the complexing agent using a solvent, complex formation can be accelerated so that each main component can be made to exist evenly to obtain an electrolyte precursor where halogen atoms are more dispersed and fixed and, as a result, an effect of obtaining a solid electrolyte having a high ionic conductivity can be more readily exhibited.

The method of producing a solid electrolyte of the present embodiment is a so-called heterogeneous method, in which preferably the complex does not completely dissolve in the complexing agent that is liquid but can precipitate. By adding a solvent, solubility of the complex dissolution can be controlled. In particular, halogen atoms readily dissolve out from the complex, and by adding a solvent, a desired complex can be obtained while dissolution of halogen atom is retarded. As a result, it is preferable that, via an electrolyte precursor where components such as halogens are dispersed, a sulfide solid electrolyte having a high ionic conductivity can be obtained.

The solvent having such properties is preferably a solvent having a solubility parameter of 10 or less. In the present description, the solubility parameter is described in various documents, for example, "Chemical Handbook" (issued in 2004, revised 5th edition, Maruzen Corporation), and is a value $\delta$ ($(cal/cm^3)^{1/2}$) calculated according to the following mathematical formula (1), and this is also referred to as a Hildebrand parameter, SP value.

$$\delta = \sqrt{(\Delta H - RT)/V} \qquad (1)$$

(In the mathematical formula (1), $\Delta H$ is a molar heat generation, R is a vapor constant, T is a temperature, V is a molar volume.)

By using a solvent having a solubility parameter of 10 or less, a halogen atom and the raw materials containing a halogen atom such as lithium halide, and further a component containing a halogen atom that constitutes a co-crystal contained in the complex (for example, an aggregate of a lithium halide and the complexing agent bonding thereto) can be made to be hardly soluble, relatively as compared with the above-mentioned complexing agent, and therefore halogen atoms can be readily fixed in the complex so that in the resultant electrolyte precursor and further in the solid electrolyte halogen atoms can exist in a well dispersed state, and a solid electrolyte having a high ionic conductivity can be readily obtained. Specifically, it is desirable that the solvent for use in the present embodiment does not dissolve the complex. From the same viewpoint, the solubility parameter of the solvent is preferably 9.5 or less, more preferably 9.0 or less, even more preferably 8.5 or less.

More specifically, a solvent heretofore widely used in solid electrolyte production can be employed as the solvent in the present embodiment and is preferably at least one selected from a non-polar solvent and an aprotic polar solvent. Among these, it is preferable that one whose solubility parameter falls within the above range is appropriately selected and used, and examples thereof include a hydrocarbon solvent such as an aliphatic hydrocarbon solvent, an alicyclic hydrocarbon solvent and an aromatic hydrocarbon solvent; a solvent containing a carbon atom, such as an alcohol solvent, an ester solvent, an aldehyde solvent, a ketone solvent, and a solvent containing a carbon atom and a hetero atom. Among these, it is preferable that one whose solubility parameter falls within the above range is appropriately selected and used.

More specifically, the solvent includes an aliphatic hydrocarbon solvent such as hexane (7.3), pentane (7.0), 2-ethylhexane, heptane (7.4), octane (7.5), decane, undecane, dodecane, and tridecane; an alicyclic hydrocarbon solvent such as cyclohexane (8.2), and methylcyclohexane; an aromatic hydrocarbon solvent acetonitrile (11.9) such as benzene, toluene (8.8), xylene (8.8), mesithylene, ethylbenzene (8.8), tert-butylbenzene, trifluoromethylbenzene, nitrobenzene, chlorobenzene (9.5), chlorotoluene (8.8), and bromobenzene; and a solvent containing a carbon atom and a hetero atom such as carbon disulfide. In the above exemplification, the numeral value in the parenthesis is an SP value.

Among these solvents, preferred are an aliphatic hydrocarbon solvent, an alicyclic hydrocarbon solvent, and an aromatic hydrocarbon solvent; and from the viewpoint of more stably attaining a high ionic conductivity, heptane, cyclohexane, toluene, ethylbenzene, diethyl ether, and cyclohexane are especially preferred. The solvent for use in the present embodiment is preferably an organic solvent of the above-mentioned exemplifications and is an organic solvent differing from the above-mentioned complexing agent. In the present embodiment, one alone or plural kinds of these solvents can be used either singly or as combined.

It is preferable to use a solvent having a relative permittivity of less than 3.2 at 25 °C because the complexing agent can easily be replaced with the oxygen atom-containing compound during the grinding treatment described below.

(Grinding treatment)

The mixture of the raw material inclusion and the complexing agent obtained as described above can be further subjected to a grinding treatment to promote the formation of a complex.

Details of the grinding treatment are the same as those for grinding the electrolyte precursor described later in a solvent containing an oxygen atom-containing compound having a relative permittivity of 3.2 or higher at 25 °C.

(Removal of Complexing agent, and the like)

In the present embodiment, since the electrolyte precursor is in the form of a suspension in most cases, the process of removing the complexing agent and the solvent used as necessary (hereinafter, referred to as "complexing agent, and the like"), by operations such as drying and solid-liquid separation, may also be included. According to this, a powder of the electrolyte precursor is obtained. By removing the complexing agent, and the like, before heating to be mentioned below, it becomes possible to efficiently perform heating, and the mode is preferred. The removing the complexing agent, and the like, and the subsequent heating may be performed in the same process.

The drying can be performed at a temperature depending on the kind of the complexing agent and the solvent, used as necessary, remaining in the electrolyte precursor. For example, the drying can be performed at a temperature of the boiling point or higher of the complexing agent and the solvent. In addition, the drying can be performed through drying under reduced pressure (vacuum drying) using a vacuum pump or the like at typically 5 to 100°C, preferably 10 to 85°C, more preferably 15 to 70°C, and still more preferably around room temperature (23°C) (for example, (room temperature) ± about 5°C), to volatilize the complexing agent and the solvent.

Different from the complexing agent, the solvent can hardly be taken in the complex, and therefore the solvent taken in the complex is generally 3% by mass or less, preferably 2% by mass or less, even more preferably 1% by mass or less.

The solid-liquid separation can be performed by filtration using a glass filer, decantation, or centrifuge and the like. In the present embodiment, after performing the solid-liquid separation, the drying can be further performed under the above temperature condition.

Specifically, for the solid-liquid separation, decantation in which the suspension is transferred into a container, and after solid precipitation, the complexing agent and the optionally-added solvent that are to be supernatants are removed, or filtration with a glass filter having a pore size of, for example, about 10 to 200 μm, and preferably 20 to 150 μm, is easy.

The complex is constituted of the complexing agent, a lithium atom, a sulfur atom, a phosphorus atom, and a halogen atom, and is characterized in that, on the X-ray diffraction pattern in the X-ray diffractometry, peaks different from raw materials-derived peaks are observed, and preferably the complex contains a co-crystal composed of the complexing agent, a lithium atom, a sulfur atom, a phosphorus atom, and a halogen atom. By merely mixing raw materials, peaks derived from the raw materials are only observed, but by mixing raw materials and the complexing agent, peaks different from the raw materials-derived peaks are observed, and from this, it is known that the complex has a structure obviously different from the raw materials themselves contained in the raw materials.

The content of the complexing agent in the complex differs depending on the molecular weight of the complexing agent, but is generally approximately 10% by mass or more and 70% by mass or less, preferably 15% by mass or more and 65% by mass or less.

(Complex degradation treatment)

In the method of producing of the present embodiment, a complex degradation treatment may be performed to heat and convert the electrolyte precursor into a complex degradate. As described later, the complex degradate substantially functions as a solid electrolyte.

(Heating of Electrolyte Precursor)

By including the process of heating the electrolyte precursor, the complexing agent is removed from the electrolyte precursor, and a complex degradate containing a lithium atom, a sulfur atom, a phosphorus atom and a halogen atom can be obtained. Here, the fact that the complexing agent is removed from the electrolyte precursor is obvious from the results of the X-ray diffraction pattern and gas chromatography which confirm that the complexing agent constitute a co-crystal with an electrolyte precursor. In addition to this, the fact is supported by the fact that the X-ray diffraction pattern of the solid electrolyte obtained by removal of the complexing agent achieved by heating the electrolyte precursor is the same as that of the solid electrolyte obtained according to a conventional method not using a complexing agent.

In the present embodiment, the complex degradate is obtained by heating the electrolyte precursor to remove the complexing agent from the electrolyte precursor, and it is preferred that the content of the complexing agent in the complex degradate is as small as possible, and the complexing agent can be contained to an extent that the performance of the complex degradate is not impaired. The content of the complexing agent in the complex degradate can be typically 10% by mass or less, and it is preferably 5% by mass or less, more preferably 3% by mass or less, and still more preferably 1% by mass or less.

For example, in the case of obtaining the complex degradate, the heating temperature of the electrolyte precursor may be determined according to the structure of the complex degradate which is obtained by heating the electrolyte precursor. Specifically, the heating temperature may be determined by subjecting the electrolyte precursor to differential thermal analysis (DTA) with a differential thermal analysis device (DTA device) under a temperature rise condition of 10°C/min and adjusting the temperature to a range of preferably 5°C or lower, more preferably 10°C or lower, and still more preferably 20°C or lower starting from a peak top temperature of the exothermic peak detected on the lowermost temperature side. Although a lower limit thereof is not particularly restricted, it may be set to a temperature of about a peak top temperature of the exothermic peak detected on the lowermost temperature side - 40°C, or higher. By regulating the heating temperature to such a temperature range, the complex degradate is obtained more efficiently and surely. Although the heating temperature cannot be unequivocally prescribed because it varies with the structure of the resultant complex degradate, in general, it is preferably 190 °C or lower, more preferably 180°C or lower, and still more preferably 170°C or lower. Although a lower limit of the heating temperature is not particularly limited, it is preferably 90°C or higher, more preferably 110°C or higher, still more preferably 130°C or higher.

Although the heating time is not particularly limited so long as it is a time for which the desired complex degradate or crystalline sulfide solid electrolyte is obtained, for example, it is preferably 1 minute or more, more preferably 10 minutes or more, still more preferably 30 minutes or more, and yet still more preferably 1 hour or more. In addition, though an upper limit of the heating time is not particularly restricted, it is preferably 24 hours or less, more preferably 10 hours or less, still more preferably 5 hours or less, and yet still more preferably 3 hours or less.

It is preferred that the heating is performed in an inert gas atmosphere (for example, a nitrogen atmosphere and an argon atmosphere) or in a reduced pressure atmosphere (especially, in vacuo). This is because deterioration (for example, oxidation) of the complex degradate and the crystalline sulfide solid electrolyte can be prevented from occurring. Although a method for heating is not particularly limited, for example, a method of using a hot plate, a vacuum heating device, an argon gas atmosphere furnace, or a firing furnace can be adopted. In addition, industrially, a lateral dryer or a lateral vibration fluid dryer provided with a heating means and a feed mechanism may be selected according to the heating treatment amount.

(Complex Degradate)

The complex degradate obtained in the present embodiment contains a lithium atom, a sulfur atom, a phosphorus atom, and a halogen atom. As representative examples thereof, there are preferably exemplified solid electrolytes constituted of lithium sulfide, phosphorus sulfide, and a lithium halide, such as $Li_2S\text{-}P_2S_5\text{-}LiI$, $Li_2S\text{-}P_2S_5\text{-}LiCl$, $Li_2S\text{-}P_2S_5\text{-}LiBr$, and $Li_2S\text{-}P_2S_5\text{-}LiI\text{-}LiBr$; and solid electrolytes further containing other atom, such as an oxygen atom and a silicon atom, for example, $Li_2S-P_2S_5-Li_2O-LiI$ and $Li_2S-SiS_2-P_2S_5-LiI$. From the viewpoint of obtaining a higher ionic conductivity, solid electrolytes constituted of lithium sulfide, phosphorus sulfide, and a lithium halide, such as $Li_2S-P_2S_5-LiI$, $Li_2S-P_2S_5-LiCl$, $Li_2S-P_2S_5-LiBr$, and $Li_2S-P_2S_5-LiI-LiBr$, are preferred.

The kinds of the atoms constituting the complex degradate can be confirmed by, for example, an inductivity coupled plasma optical emission spectrometer (ICP).

In the case where the complex degradate obtained in the present embodiment is one having at least $Li_2S-P_2S_5$, from the viewpoint of obtaining a higher ionic conductivity, a molar ratio of $Li_2S$ to $P_2S_5$ is preferably 65 to 85:15 to 35, more preferably 70 to 80:20 to 30, and still more preferably 72 to 78:22 to 28.

In the case where the complex degradate obtained in the present embodiment is, for example, $Li_2S-P_2S_5-LiI-LiBr$, the total content of lithium sulfide and diphosphorus pentasulfide is preferably 60 to 95 mol%, more preferably 65 to 90 mol%, and still more preferably 70 to 85 mol%. In addition, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the complex degradate obtained in the present embodiment, a blending ratio (molar ratio) of a lithium atom, a sulfur atom, a phosphorous atom and a halogen atom is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, and still more preferably 1.2 to 1.6:1.3 to 1.7:0.25 to 0.5:0.08 to 0.4. In addition, in the case of using a combination of bromine and iodine as a halogen atom, a blending ratio (molar ratio) of a lithium atom, a sulfur atom, a phosphorus atom, bromine and iodine is preferably 1.0 to 1.8:1.0 to 2.0:0.1 to 0.8:0.01 to 3.0:0.01 to 0.3, more preferably 1.1 to 1.7:1.2 to 1.8:0.2 to 0.6:0.02 to 0.25:0.02 to 0.25, still more preferably 1.2 to 1.6:1.3 to 1.7:0.25 to 0.5:0.03 to 0.2:0.03 to 0.2, and yet still more preferably 1.35 to 1.45:1.4 to 1.7:0.3 to 0.45:0.04 to 0.18:0.04 to 0.18. By allowing the blending ratio (molar ratio) of a lithium atom to a sulfur atom to a phosphorus atom to a halogen atom to fall within the above range, it becomes easy to obtain a solid electrolyte having a thio-LISICON Region II-type crystal structure which will be described later and having a higher ionic conductivity.

In this description, the average particle diameter (D50) is a value measured according to a laser diffraction particle size distribution measuring method, and for example, it can be measured according to the method described in Examples.

Although the shape of the complex degradate is not particularly limited, examples thereof include a granular shape. The average particle diameter (D50b) of the granular complex degradate is, for example, within a range of 0.01 $\mu$m to 500 $\mu$m, and further 0.1 to 200 $\mu$m.

In the present description, the specific surface area is a value measured according to a BET method, and for example, it can be measured according to the method described in Examples.

The specific surface area (Sb) of the complex degradate before grinding treatment is preferably 21 $m^2/g$ or more, more preferably 23 $m^2/g$ or more, even more preferably 25 $m^2/g$ or more, further more preferably 27 $m^2/g$ or more, and the upper limit is preferably 70 $m^2/g$ or less, more preferably 60 $m^2/g$ or less, even more preferably 50 $m^2/g$ or less, further more preferably 35 $m^2/g$ or less.

<Obtaining grinding treatment product>

In the present embodiment, it is necessary to obtain a grinding treatment product by performing a grinding treatment of the electrolyte precursor in a solvent containing an oxygen atom-containing compound having a relative permittivity of 3.2 or higher at 25 °C.

By performing grinding treatment in a solvent containing the above-mentioned oxygen atom-containing compound, the complexing agent remaining inside the electrolyte precursor is removed by being replaced with the oxygen atom-containing compound, and the conduction path is inhibited by the remaining complexing agent. This is preferable because a solid electrolyte with high ionic conductivity can be obtained, and thermal stability is also improved.

(Solvent)

As the solvent used when performing the above-mentioned grinding treatment, only an oxygen atom-containing compound having a relative permittivity of 3.2 or higher at 25 °C may be used, but it may also be used in combination with other solvents.

As such other solvents, those similar to those used when mixing the raw material inclusion and the complexing agent described above can be used, but hydrocarbon solvents are preferable.

As the solvent used in the grinding treatment, those containing 50 to 99.5% by mass of a hydrocarbon compound and 0.5 to 50% by mass of an oxygen atom-containing compound are preferred, those containing 65 to 95 mass percent hydrocarbon compounds and 5 to 35 mass percent oxygen atom-containing compounds are more preferred, and those containing 80 to 95 mass percent hydrocarbon compounds and 5 to 20 mass percent oxygen atom-containing compounds are even more preferred.

(Oxygen atom-containing compound)

In the present description, an oxygen atom-containing compound is one that has a relative permittivity of 3.2 or higher at 25 °C, and other than the above complexing agents capable of forming complexes containing $Li_3PS_4$ obtained from $Li_2S$ and $P_2S_5$, which are preferably used as raw materials for solid electrolytes, are preferred.

By performing grinding treatment of the electrolyte precursor obtained using a complexing agent in a solvent containing an oxygen atom-containing compound, the complexing agent remaining inside the electrolyte precursor is replaced with the oxygen atom-containing compound, and it is considered that the ionic conductivity of the sulfide solid electrolyte finally obtained is improved.

As the oxygen atom-containing compound, any compound containing an oxygen atom and having the above-mentioned relative permittivity can be used without particular limitation, but those having a relative permittivity of 3.5 or more at 25 °C are preferable and those having a relative permittivity of 3.7 or more are more preferable.

The oxygen atom existing in the molecule of the oxygen atom-containing compound has a high affinity for a lithium atom, and is considered to bond to $Li_3PS_4$ containing a $PS_4$ structure which is a main skeleton of the solid electrolyte produced in the present embodiment, thereby having an ability to easily form a complex. Therefore, it is considered that the removal of the complexing agent remaining inside of the electrolyte precursor is promoted by mixing the electrolyte precursor and the oxygen atom-containing compound.

The group containing an oxygen atom preferably has one or more functional groups selected from ether groups and ester groups, and among them, especially preferred are ether groups. Specifically, the oxygen atom-containing compound is especially preferably an ether compound. In relation to the complexing agent, the oxygen atom-containing compound is preferably one not containing a nitrogen atom as the hetero atom. Accordingly, in the present embodiment, it is preferable that one having a nitrogen atom as the hetero atom is employed as the complexing agent, and also preferable that one not containing a nitrogen atom as the hetero atom is employed as the oxygen atom-containing compound. With that, the function of the complexing agent already mentioned above and that of the oxygen atom-containing compound can be effectively exploited, and the ionic conductivity of the resultant solid electrolyte can be thereby increased.

Examples of the ether compound include an aliphatic ether, an alicyclic ether, a heterocyclic ether and an aromatic ether, and one alone or plural kinds of these can be used either singly or as combined.

More specifically, the aliphatic ether includes a monoether such as dimethyl ether, diethyl ether, diisopropyl ether, and a tert-butyl methy ether; a diether such as dimethoxymethane, dimethoxyethane, diethoxymethane and diethoxyethane; a polyether having three or more ether groups such as diethylene glycol dimethyl ether (diglyme), and triethylene oxide glycol dimethyl ether (triglyme); and a hydroxy group-containing ether such as diethylene glycol, and triethylene glycol.

The carbon number of the aliphatic ether is 1 or more, preferably 2 or more, more preferably 3 or more, and the upper limit is preferably 20 or less, more preferably 10 or less, even more preferably 7 or less.

Further, as the aliphatic ether, aliphatic ethers having a branched alkyl group on an oxygen atom such as diisopropylether, are most preferably used.

The alicyclic ether includes ethylene oxide, propylene oxide, tetrahydrofuran, tetrahydropyran, dimethoxytetrahydrofuran, cyclopentyl methyl ether, and dioxolane. The heterocyclic ether includes morpholine, and hydroxymethyldimethoxypyridine.

The carbon number of the alicyclic ether and the heterocyclic ether is preferably 3 or more, more preferably 4 or more, and the upper limit is preferably 16 or less, more preferably 14 or less.

The aromatic ether includes methyl phenyl ether (anisole), ethyl phenyl ether, dibenzyl ether, diphenyl ether, benzyl phenyl ether, and naphthyl ether.

The carbon number of the aromatic ether is preferably 7 or more, more preferably 8 or more, and the upper limit is preferably 16 or less, more preferably 14 or less, even more preferably 12 or less.

The ether compound for use in the present embodiment can be substituted with a substituent such as an alkyl group, an alkenyl group, an alkoxy group, a hydroxy group or a cyano group, or a halogen atom.

As the ether compound for use in the present embodiment, from the viewpoint of attaining a higher ionic conductivity, preferred is an aliphatic ether.

Further, as the ether compound, it is preferable to use a symmetric ether represented by the below general formula (1), since the ionic conductivity of the sulfide solid electrolyte becomes more higher.

$$R^1\text{-}O\text{-}R^2 \cdots \qquad (1)$$

(in which, $R^1$ and $R^2$ each independently represents a linear alkyl group having a carbon number of 1 to 20, a branched alkyl group having a carbon number of 3 to 20, or a cycloalkyl group having a carbon number of 5 to 20).

Note that since two $R^1$s in the above general formula (1) are same group, the symmetric ether represented by the general formula (1) has a symmetric structure with respect to the central oxygen atom.

$R^1$ and $R^2$ in the above general formula (1) are each independently preferably a branched alkyl group having 3 to 20 carbon atoms, more preferably a branched alkyl group having 3 to 10 carbon atoms, and even more preferably a branched alkyl group having 3 to 8 carbon atoms. Such a bulky alkyl group can suppress excessive reactivity of the oxygen atom of the ether compound with respect to the electrolyte precursor.

Moreover, it is also preferable that the above-mentioned ether compound is a symmetrical ether in which $R^1$ and $R^2$ in the above general formula (1) are the same group.

Examples of the ester compound include an ester compound such as an aliphatic ester, an alicyclic ester, a heterocyclic ester and an aromatic ester. One alone or plural kinds of these can be used either singly or as combined.

More specifically, the aliphatic ester includes formates such as methyl formate, ethyl formate and triethyl formate; acetates such as methyl acetate, ethyl acetate, propyl acetate, isopropyl acetate, butyl acetate and isobutyl acetate; propionates such as methyl propionate, ethyl propionate, propyl propionate and butyl propionate; oxalates such as dimethyl oxalate and diethyl oxalate; malonates such as dimethyl malonate and diethyl malonate; and succinates such as dimethyl succinate and diethyl succinate.

The carbon number of the aliphatic ester is preferably 2 or more, more preferably 3 or more, even more preferably 4 or more, and the upper limit is preferably 10 or less, more preferably 8 or less, even more preferably 7 or less. The carbon number of the aliphatic hydrocarbon group in the aliphatic ester is preferably 1 or more, more preferably 2 or more, and the upper limit is preferably 6 or less, more preferably 4 or less, even more preferably 3 or less.

The alicyclic ester includes methyl cyclohexanecarboxylate, ethyl cyclohexanecarboxylate, dimethyl cyclohexanedicarboxylate, dibutyl cyclohexanedicarboxylate, and dibutyl cyclohexenedicarboxylate. The heterocyclic ester includes methyl pyridinecarboxylate, ethyl pyridinecarboxylate, propyl pyridinecarboxylate, methyl pyrimidinecarboxylate, ethyl pyrimidinecarboxylate, as well as lactones such as acetolactone, propiolactone, butyrolactone and valerolactone.

The carbon number of the alicyclic ester and the heterocyclic ester is preferably 3 or more, more preferably 4 or more, and the upper limit is preferably 16 or less, more preferably 14 or less.

The aromatic ester includes benzoates such as methyl benzoate, ethyl benzoate, propyl benzoate and butyl benzoate; phthalates such as dimethyl phthalate, diethyl phthalate, dibutyl phthalate, butylbenzyl phthalate, and dicyclohexyl phthalate; and trimellitates such as trimethyl trimellitate, triethyl trimellitate, tripropyl trimellitate, tributyl trimellitate and trioctyl trimellitate.

The carbon number of the aromatic ester is preferably 8 or more, more preferably 9 or more, and the upper limit is preferably 16 or less, more preferably 14 or less, even more preferably 12 or less.

The ester compound for use in the present embodiment can be substituted with a substituent such as an alkyl group, an alkenyl group, an alkoxy group, a hydroxy group or a cyano group, or a halogen atom.

As the ester compound for use in the present embodiment, from the viewpoint of attaining a higher ionic conductivity, preferred is an aliphatic ester, more preferred are acetates, and even more preferred is ethyl acetate.

Further, in the present embodiment, when obtaining the above electrolyte precursor, it is preferable to mix the solvent containing the oxygen atom-containing compound after the complex formation reaction by the complexing agent has progressed to a certain extent.

The method of determining a good timing of adding the oxygen atom-containing compound is not specifically limited. For example, in the case of using lithium sulfide as one starting material, the oxygen atom-containing compound can be added at the timing at which the remaining amount of lithium sulfide existing in the system has lowered to a certain value for exhibiting a higher effect.

Specifically, by adding the oxygen atom-containing compound after the remaining amount of lithium sulfide has lowered to 35 mol% or less relative to the amount initially added thereof, more preferably 30 mol% or less, even more preferably 25 mol% or less, the complex forming reaction can be accelerated more.

The amount to be added of the oxygen atom-containing compound is, preferably such that the molar ratio of the amount added of the oxygen atom-containing compound, relative to the total molar amount of $Li_3PS_4$ capable of being formed from the above-mentioned raw material inclusion, is 0.8 or more and 5.0 or less, more preferably 1.2 or more and 4.0 or less, even more preferably 1.5 or more and 3.0 or less.

By mixing the raw material and the oxygen atom-containing compound, it is possible to replace the above-mentioned complexing agent through the action of the lithium atom, sulfur atom, phosphorus atom, and halogen atom contained in the above raw material and the oxygen atom-containing compound. This makes it possible to remove the complexing agent remaining in the electrolyte precursor.

(Grinding treatment)

The grinding treatment in this embodiment may be performed by any method that can grind the particles of the electrolyte precursor to expose the newly formed surface or pulverize the particles, but it is preferably carried out using a grinding machine.

A method of performing grinding treatment with a grinding machine is a method heretofore employed as a mechanical milling method. As the grinding machine, for example, a medium-assisted grinding machine using a grinding medium can be employed.

The medium-assisted grinding machine can be grouped into a vessel driving grinding machine and a medium-stirring grinding machine. The vessel driving grinding machine includes a stirring tank, a grinding tank, or a combination thereof such as a ball mill and a bead mill. The medium-stirring grinding machine includes various grinding machines, such as an impact grinder such as a cutter mill, a hammer mill and a pin mill; a tower grinder such as a tower mill; a stirrer tank grinder such as an attritor, an Aquamizer, and a sand grinder; a flow tank grinder such as a Viscomill, and a pearl mill; a flow tube grinder; an annular grinder such as a co-ball mile; a continuous dynamic grinder; and a single-screw or multi-screw kneader. Above all, in consideration of easiness of particle size control of the resultant sulfide, preferred are a ball mill and a bead mill exemplified as a vessel driving grinding machine.

These grinding machines can be appropriately selected in accordance with the desired scale, and in a relatively small scale, usable is a vessel driving grinding machine such as a ball mill and a bead mill. On the other hand, in a large scale or for mass production, any other type of grind machine can be used.

Also as described below, in the case where grinding treatment is carried out in a liquid state or a slurry state with a liquid such as a solvent, preferred is a wet-type grind machine applicable to wet-type grinding.

Typically, the wet-type grinding machine includes a wet-type bead mill, a wet-type ball mill, and a wet-type vibrating mill. From the viewpoint that the condition for grinding operation can be freely controlled to be applicable to particles having a smaller particle size, preferred is a wet-type bead mill using beads as grinding media. Also dry-type grind machines are usable, including a dry-type medium-assisted grinding machine such as a dry-type bead mill, a dry-type ball mill, a dry-type planetary ball mill or a dry-type vibrating mill, as well as a dry-type mediumless grinding machine such as a jet mill.

Also when the subject to be mixed is in a liquid state or in a slurry state, a flow grinding machine which allows circulation operation of optionally circulating the subject can be employed. Specifically, there can be mentioned a grinding machine of a mode where a slurry is circulated between a grinding machine for grinding it (grinding and mixing machine) and a temperature retention bath (reactor).

The size of the beads and the balls for use in the above-mentioned ball mill and bead mill can be appropriately selected depending on the desired particle size, the processing amount and the like, and for example, the diameter of the beads can be generally 0.05 mmφ or more, preferably 0.1 mmφ or more, even more preferably 0.2 mmφ or more, and the upper limit is generally 5.0 mmφ or less, preferably 3.0 mmφ or less, more preferably 2.0 mmφ or less. The diameter of the balls is generally 2.0 mmφ or more, preferably 2.5 mmφ or more, more preferably 3.0 mmφ or more, and the upper limit is generally 30.0 mmφ or less, preferably 20.0 mmφ or less, more preferably 15.0 mmφ or less.

The amount to be used of the beads or the balls cannot be indiscriminately said as varying depending on the processing scale, and is generally 100 g or more, preferably 200 g or more, more preferably 300 g or more, and the upper limit is 5.0 kg or less, more preferably 3.0 kg or less, even more preferably 1.0 kg or less.

Examples of the material include metals such as stainless, chrome steel, and tungsten carbide; ceramics such as zirconia, and silicon nitride; and minerals such as agate.

Regarding the peripheral speed of the rotor, low peripheral speed and high peripheral speed can vary, for example, depending on the particle size, the material and the amount used of the media for use in the grinding machine, and therefore cannot be indiscriminately defined. For example, in the case of an apparatus not using a grinding medium such as balls or beads like a high-speed revolting thin-film stirring machine, grinding can mainly occur even at a relatively high peripheral speed, and granulation can occur hardly. On the other hand, in the case of an apparatus using a grinding medium such as a ball mill or a bead mill, grinding can be attained at a low peripheral speed as described above, and granulation is possible at a high peripheral speed. Accordingly, under the same condition for the grinding apparatus and the grinding medium, the peripheral speed that enables grinding is smaller than the peripheral speed that enables granulation. Consequently, for example, under the condition under which granulation is possible at a borderline peripheral speed of 6 m/sec, low peripheral speed means less than 6 m/sec, and high peripheral speed means 6 m/sec or more.

The amount of complexing agent remaining in the electrolyte precursor can be reduced by performing grinding treatment of the electrolyte precursor at a desired peripheral speed in a solvent containing an oxygen atom-containing compound. The peripheral speed is preferably 1 m/s or more, more preferably 2 m/s or more, and even more preferably 3 m/s or more. In addition, in the above-mentioned grinding, granulation of the electrolyte precursor may occur.

The grinding treatment time cannot be indiscriminately determined as varying depending on the processing scale, and is generally 10 minutes or more, preferably 20 minutes or more, more preferably 30 minutes or more, further more preferably 45 minutes or more, and the upper limit is generally 72 hours or less, preferably 65 hours or less, more preferably 52 hours or less.

Mixing, stirring, grinding and a combined treatment thereof can be carried out by selecting the size and the material of the medium to be used (beads, balls), as well as the rotation number of the rotor, the time and the like, and the particle size of the resultant sulfide can be thereby controlled.

In the above-mentioned grinding treatment, a solvent containing the above-mentioned oxygen atom-containing compound having a relative permittivity of 3.2 or higher can be added to and mixed with the above-mentioned electrolyte precursor.

(Grinding treatment product)

The grinding treatment product has the same chemical characteristics as those of the above-mentioned electrolyte precursor, but differs in the specific surface area.

The grinding treatment product after grinding treatment has a larger specific surface area than the electrolyte precursor before grinding treatment. As influenced by the specific surface area of the electrolyte precursor for use for grinding treatment, the specific surface area (Sa) of the grinding treatment product cannot be indiscriminately said, but the lower limit thereof is preferably 0.5 m$^2$/g or more, more preferably 1.0 m$^2$/g or more, even more preferably 2.0 m$^2$/g or more, and the upper limit is preferably 30 m$^2$/g or less, more preferably 20 m$^2$/g or less, even more preferably 15 m$^2$/g or less, further more preferably 12 m$^2$/g or less.

In the present embodiment, the ratio of the specific surface area (Sb) of the electrolyte precursor before the grinding treatment to the specific surface area (Sa) of the grinding treatment product (Sb/Sa) is, from the viewpoint of increasing the ionic conductivity of the crystalline sulfide solid electrolyte, preferably 1.0 or more and 10.0 or less, more preferably 2.0 or more and 8.0 or less, even more preferably 3.0 or more and 7.0 or less.

Although the shape of the grinding treatment product is not particularly limited, examples thereof include a granular shape. The average particle diameter (D50a) of the grinding treatment product is preferably free from granulation by grinding treatment and is, for example, within a range of 0.01 μm to 500 μm, further within a range of 0.1 to 200 μm.

In the present embodiment, the ratio (D50b/D50a) of the average particle diameter of the electrolyte precursor before grinding treatment (D50b) to the average particle diameter of the grinding treatment product (D50a) is, from the viewpoint of increasing the ionic conductivity of the sulfide solid electrolyte, preferably 1.0 or more and 100.0 or less, more preferably 2.0 or more and 80.0 or less, even more preferably 2.5 or more and 70.0 or less.

<Removal of solvent from the grinding treatment product>

In the present embodiment, it is required to remove the solvent from the grinding treatment product to obtain the sulfide solid electrolyte.

The methods of removing the solvent from the grinding treatment product can be performed by drying or solid-liquid separation in the same manner as the above-mentioned removal of the complexing agent. The specific details of drying and solid-liquid separation are also the same as those described in the above-mentioned removal of the complexing agent.

(Heating of the sulfide solid electrolyte)

In the present embodiment, a process of further heating the sulfide solid electrolyte can be provided.

It is preferable since the amorphous sulfide solid electrolyte is crystallized to obtain a crystalline sulfide solid electrolyte having a high ionic conductivity, by heating. Moreover, it is preferable since the crystallinity is improved when the crystalline sulfide solid electrolyte is obtained, by removing the solvent.

In the case of obtaining the crystalline sulfide solid electrolyte by heating the amorphous sulfide solid electrolyte, the heating temperature may be determined according to the structure of the crystalline sulfide solid electrolyte, and it is preferably higher than the above drying temperature for obtaining the amorphous sulfide solid electrolyte. Specifically, the heating temperature may be determined by subjecting the sulfide solid electrolyte to differential thermal analysis (DTA) with a differential thermal analysis device (DTA device) under a temperature rise condition of 10°C/min and adjusting the temperature to a range of preferably 5°C or higher, more preferably 10°C or higher, and still more preferably 20°C or higher starting from a peak top temperature of the exothermic peak detected on the lowermost temperature side. Although an upper limit thereof is not particularly restricted, it may be set to a temperature of about 40°C or lower. By regulating the heating temperature to such a temperature range, the crystalline sulfide solid electrolyte is obtained more efficiently and surely. Although the heating temperature for obtaining the crystalline sulfide solid electrolyte cannot be unequivocally prescribed because it varies with the structure of the resultant crystalline sulfide solid electrolyte, in general, it is preferably 130°C or higher, more preferably 135°C or higher, and still more preferably 140°C or higher. Although an upper limit of the heating temperature is not particularly limited, it is preferably 300°C or lower, more preferably 280°C or lower, and still more preferably 250°C or lower.

(Crystalline Sulfide Solid Electrolyte)

The crystalline sulfide solid electrolyte obtained by the heating may be a so-called glass ceramics which is obtained by heating the sulfide solid electrolyte to a crystallization temperature or higher. Examples of a crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta = 20.2°$ and $23.6°$ (see, for example, JP 2013-16423 A).

In addition, examples thereof include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725). Among those mentioned above, a crystal structure of the crystalline sulfide solid electrolyte obtained by the present production method is preferably a thio-LISICON Region II-type crystal structure from the standpoint that a higher ionic conductivity is obtained. Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure. In addition, though the crystalline sulfide solid electrolyte obtained by the present production method may be one having the above thio-LISICON Region II-type crystal structure or may be one having the thio-LISICON Region II-type crystal structure as a main crystal, it is preferably one having the thio-LISICON Region II-type crystal structure as a main crystal from the viewpoint of obtaining a higher ionic conductivity. In this description, the wording "having as a main crystal" means that a proportion of the crystal structure serving as an object in the crystal structure is 80% or more, and it is preferably 90% or more, and more preferably 95% or more. In addition, from the viewpoint of obtaining a higher ionic conductivity, the crystalline sulfide solid electrolyte obtained by the present production method is preferably one not containing crystalline $Li_3PS_4$ (β-$Li_3PS_4$).

In the X-ray diffractometry using a CuKα ray, the $Li_3PS_4$ crystal structure gives diffraction peaks, for example, at around $2\theta = 17.5°$, $18.3°$, $26.1°$, $27.3°$, and $30.0°$; the $Li_4P_2S_6$ crystal structure gives diffraction peaks, for example, at around $2\theta = 16.9°$, $27.1°$, and $32.5°$; the $Li_7PS_6$ crystal structure gives diffraction peaks, for example, at around $2\theta = 15.3°$, $25.2°$, $29.6°$, and $31.0°$; the $Li_7P_3S_{11}$ crystal structure gives diffraction peaks, for example, at around $2\theta = 17.8°$, $18.5°$, $19.7°$, $21,8°$, $23.7°$, $25.9°$, $29.6°$, and $30.0°$; the $Li_{4-x}Ge_{1-x}P_xS_4$-based thio-LISICON Region II-type crystal structure gives diffraction peaks, for example, at around $2\theta = 20.1°$, $23.9°$, and $29.5°$; and the crystal structure similar to the $Li_{4-x}Ge_{1-x}P_xS_4$-based thio-LISICON Region II-type crystal structure gives diffraction peaks, for example, at around $20 = 20.2$ and $23.6°$. The position of these peaks may vary within a range of $\pm 0.5°$.

As mentioned above, in the case when the thio-LISICON Region II-type crystal structure is obtained in the present embodiment, preferably, this does not contain a crystalline $Li_3PS_4$ (β-$Li_3PS_4$).

The crystal structure having the above-mentioned $Li_7PS_6$ structural skeleton in which a part of P is substituted with Si to have a compositional formula $Li_{7-x}P_{1-y}Si_yS_6$ or $Li_{7+x}P_{1-y}Si_yS_6$ (x represents -0.6 to 0.6, y represents 0.1 to 0.6) is a cubic crystal or a rhombic crystal, preferably a cubic crystal having peaks mainly appearing at the position of $2\theta = 15.5°$, $18.0°$, $25.0°$, $30.0°$, $31.4°$, $45.3°$, $47.0°$, and $52.0°$ in X-ray diffractometry using a CuKα ray. The crystal structure shown by the above-mentioned compositional formula $Li_{7-x-2y}PS_{6-x-y}Cl_x$ ($0.8 \leq x \leq 1.7$, $0 < y \leq -0.25x+0.5$) is preferably a cubic crystal having peaks mainly appearing at the position of $2\theta = 15.5°$, $18.0°$, $25.0°$, $30.0°$, $31.4°$, $45.3°$, $47.0°$, and $52.0°$ in X-ray diffractometry using a CuKα ray. The crystal structure shown by the above-mentioned compositional formula $Li_{7-x}PS_{6-x}Ha_x$ (Ha represents Cl or Br, x is preferably 0.2 to 1.8) is preferably a cubic crystal having peaks mainly appearing at the position of $2\theta = 15.5°$, $18.0°$, $25.0°$, $30.0°$, $31.4°$, $45.3°$, $47.0°$, and $52.0°$ in X-ray diffractometry using a CuKα ray.

The position of these peaks may vary within a range of $\pm 0.5°$.

The crystalline sulfide solid electrolyte obtained by the present production method is preferably such that the full-width at half-maximum of the maximum peak including the background at $2\theta = 10$ to $40°$ in X-ray diffractometry using a CuKα ray is preferably $\Delta 2\theta = 0.32$ or less. Having such properties, the solid electrolyte attains a higher ionic conductivity and enhances cell performance. From the same viewpoint, the full-width at half-maximum of the maximum peak is more preferably $\Delta 2\theta = 0.30$ or less, even more preferably $\Delta 2\theta = 0.28$ or less.

Examples of the crystalline sulfide solid electrolyte having such properties include typically one having a thio-LISICON Region II-type crystal structure.

Full-width at half-maximum can be calculated as follows.

A range at a maximum peak $\pm 2°$ is used. A proportion of Lorentzian function is represented by A ($0 \leq A \leq 1$), a peak intensity correction value is represented by B, a $2\theta$ maximum peak is represented by C, a peak position in the range for calculation ($C \pm 2°$) is represented by D, a full-width at half-maximum is represented by E, a background is represented by F, each peak intensity in a peak range for use for calculation is represented by G. With A, B, C, D, E and F being variables, the following is calculated for every peak position.

$$H = G - \{B \times \{A/(1+(D-C)^2/E^2)+(1-A) \times \exp(-1 \times (D-C)^2/E^2)\}+F\}$$

H is totalized within the range of the above peak C $\pm$ 2° in calculation, and the total value is minimized in GRG non-linearity using a solver function of spreadsheet software Excel (Microsoft) to give a full-width at half-maximum.

Although the shape of the crystalline sulfide solid electrolyte is not particularly restricted, examples thereof include a granular shape. The average particle diameter ($D_{50}$) of the granular crystalline sulfide solid electrolyte is, for example, within a range of 0.01 $\mu$m to 500 $\mu$m, and 0.1 to 200 $\mu$m.

The volume-based average particle diameter of the crystalline sulfide solid electrolyte obtained according to the present production method is the same as the average particle size of the sulfide solid electrolyte of the present embodiment mentioned above, and is 3 $\mu$m or more.

The specific surface area, as measured according to a BET method, of the crystalline sulfide solid electrolyte obtained according to the present production method is the same as the specific surface area of the sulfide solid electrolyte of the present embodiment mentioned above, and is 20 m$^2$/g or more.

[Sulfide Solid Electrolyte]

The sulfide solid electrolyte of the present embodiment contains a lithium atom, a sulfur atom, a phosphorus atom, and a halogen atom, 0.1 to 0.9 % by mass of the complexing agent having the number of hetero atom in the molecule of 2 or more, and 0.01 to 0.5 % by mass of the oxygen atom-containing compound having a relative permittivity of 3.2 or higher at 25 °C.

In the sulfide solid electrolyte obtained by the above method of producing the sulfide solid electrolyte, the contents of the complexing agent having the number of hetero atom in the molecule of two or more, and the oxygen atom-containing compound having the relative permittivity of 3.2 or higher at 25 °C, become within the above ranges, based on the manufacturing process.

Here, the details of the complexing agent having the number of hetero atom of 2 or more, and the oxygen atom-containing compound having the relative permittivity at 25 °C of 3.2 or higher, are same as those described in the above-mentioned method of producing a sulfide solid electrolyte.

A method of measuring of the complexing agent having the number of hetero atom in the molecule of 2 or more and the oxygen atom-containing compound having the relative permittivity at 25 °C of 3.2 or higher, for example, include the methods used in the Examples described below.

From the view point of improvement of the ionic conductivity, the content of the complexing agent having the number of hetero atom in the molecule of 2 or more in the sulfide solid electrolyte of the present embodiment, is preferably 0.1 to 0.75 % by mass, more preferably 0.1 to 0.5 % by mass.

Moreover, from the view point of improvement of the ionic conductivity, the content of oxygen atom-containing compound having the relative permittivity at 25 °C of 3.2 or higher in the sulfide solid electrolyte of the present embodiment, is preferably 0.01 to 0.3 % by mass, more preferably 0.01 to 0.2 % by mass.

In the present embodiment, by performing grinding treatment of the electrolyte precursor using an oxygen atom-containing compound having a relative permittivity of 3.2 or higher at 25 °C, the interaction between Li ions and the complexing agent is inhibited by the oxygen atom-containing compound. Thereafter, the contents of the oxygen atom-containing compound and the complexing agent can be reduced by drying or heating the grinding treatment product. In this way, by adjusting the content of the complexing agent and the oxygen atom-containing compound remaining inside the sulfide solid electrolyte after crystallization to the above numerical range, conductivity can be improved without inhibiting the conduction path.

The sulfide solid electrolyte of the present embodiment preferably has a crystallization exothermic peak at 270 to 310 °C in the differential thermal analysis (DTA) from the viewpoint of the thermal stability, and more preferably has a crystallization exothermic peak at 280 to 310 °C, even more preferably has a crystallization exothermic peak at 290 to 310 °C.

Here, the above-mentioned crystallization exothermic peak is defined that, for example, the one in which the increase of Heat flow is 0.3 W/g or more in the differential thermal analysis (DTA).

Furthermore, the sulfide solid electrolyte of the present embodiment has a specific surface area of 1 to 20 m$^2$/g and preferably has an average particle diameter (D50) of 0.1 to 10 $\mu$m.

(Use of Sulfide Solid Electrolyte)

The sulfide solid electrolyte of the present embodiment has a high ionic conductivity, and has excellent cell performance, and in addition, it hardly generates hydrogen sulfide. Consequently, it is suitably used for batteries.

In the case of adopting a lithium element as the conduction species, such is especially suitable. The sulfide solid electrolyte of the present embodiment may be used for a positive electrode layer, may be used for a negative electrode layer, or may be used for an electrolyte layer. Each of the layers can be produced by a known method.

The above battery preferably uses a collector in addition to the positive electrode layer, the electrolyte layer, and the negative electrode layer, and the collector can be any known one. For example, a layer formed by coating Au, Pt, Al, Ti, Cu, or the like capable of reacting with the above crystalline sulfide solid electrolyte, with Au or the like can be used.

Examples

Next, the present invention is described specifically with reference to Examples, but it should be construed that the present invention is by no means restricted by these Examples.

(1) Measurement methods are described.

(1-1) Volume-based Average Particle Diameter (D50)

This is measured with a laser diffraction/scattering particle size distribution measuring apparatus ("Partica LA-950 (Model Number)", by HORIBA, Ltd.).
A mixture of dewatered toluene (manufactured by Fujifilm Wako Pure Chemical Industries, Ltd., special grade chemical) and tertiary butyl alcohol (manufactured by Fujifilm Wako Pure Chemical Industries, Ltd., special grade chemical) in a weight ratio of 93.8:6.2, was used as a dispersion medium. 50 mL of the dispersion medium was injected into a flow cell of the apparatus and circulated therein, and then a subject to be measured was added and ultrasonically processed, and thereafter the particle size distribution thereof was measured. The amount of the subject to be measured was so controlled that, on the screen for measurement as defined by the apparatus, the red light transmittance (R) corresponding to the particle concentration could fall 80 to 90% and the blue light transmittance (B) could fall 70 to 90%. Regarding the arithmetic condition, the refractive index of the subject to be measured to be 2.16, and the refractive index of the dispersion medium to be 1.49 were respectively used. In setting the distribution morphology, the number of repetition was fixed at 15 times in particle size calculation.

(1-2) Measurement of Specific Surface Area

A value measured in a BET flow method (three-point method) using a nitrogen gas as the adsorbate, according to JIS R 1626:1996, was referred to as a specific surface area.

(1-3) Measurement of Ionic Conductivity

In the present Examples, the ionic conductivity was measured as follows.
A sulfide solid electrolyte was molded into disc pellets having a diameter of 10 mm (cross section S: 0.785 cm$^2$) and a height (L) of 0.1 to 0.3 cm to be samples. An electrode terminal was taken from the top and the bottom of the sample, and in measurement according to an AC impedance method at 25°C (frequency range: 1 MHz to 100 Hz, amplitude: 10 mV), Cole-Cole plots were drawn. At around the right edge of the arc observed in the highfrequency region, the real part Z' ($\Omega$) at the point at which -Z" ($\Omega$) was the smallest was referred to as a bulk resistance R ($\Omega$) of the electrolyte, and according to the following mathematical formulae, the ionic conductivity $\sigma$ (S/cm) was calculated.

$$R = \rho(L/S)$$

$$\sigma = 1/\rho$$

(1-4) X-ray Diffractometry (XRD)

In X-ray diffractometry, the resultant crystalline product was measured.
A sample powder of produced in each Example was filled in a groove having a diameter of 20 mm and a depth of 0.2 mm, and leveled with glass. The sample was sealed up with a Kapton film for XRD and used for measurement while kept out of contact with air.
Using a powdery X-ray diffractometry apparatus D2 PHASER by Bruker Corporation, the measurement was carried out under the following conditions.
Tube voltage: 30 kV

Tube current: 10 mA
X-ray wavelength: Cu-K$\alpha$ ray (1.5418 Å)
Optical system: focusing method
Slit structure: solar slit 4° (both on light incident side and light reception side), divergence slit 1 mm, K$\beta$ filter (Ni plate 0.5%), (using air scatter screen 3 mm)
Detector: semiconductor detector
Measurement range: 2$\theta$ = 10- to 60 degrees
Step width, scan speed: 0.05 deg, 0.05 deg/sec

(1-5) Measurement of the content of the complexing agent and the oxygen atom-containing compound

The powdered crystalline solid electrolyte obtained in Example 1 and Comparative Examples 1 to 3 were dissolved in 1-pentanol, and the resulting 1-pentanol solution was analyzed by gas chromatography to measure the contents of the complexing agent and the oxygen atom-containing compounds. The results are shown in Table 1.

(1-6) Differential thermal analysis (DTA)

By using a differential thermal analysis device (DTA device) under a temperature increasing condition of 10 °C/min, the differential thermal analysis (DTA) was performed and the crystallization temperature (crystallization exothermic peak) was measured. When Heat flow increased by 0.3 W/g or more, it was considered that the crystallization exothermic peak was observed.

(1-7) Relative permittivity

It was measured at a frequency of 10kHz and 25 °C using Model-871 (product name, manufactured by Sanyo Trading Co., Ltd.) in accordance with JIS C 2138:2007 "Electrical insulating materials - measurement method of relative permittivity and dielectric loss tangent".

(Example 1)

13.19 g of lithium sulfide, 21.26 g of diphosphorus pentasulfide, 4.15 g of lithium bromide, and 6.40 g of lithium iodide were introduced into a 1-liter reaction tank equipped with stirring blades under a nitrogen atmosphere. To this, 100 mL of tetramethylethylenediamine (TMEDA) as a complexing agent and 800 mL of cyclohexane as a solvent were added, and a stirring blade was operated to perform mixing by stirring. 456 g of zirconia balls (diameter: 0.5 mm$\varphi$) (bead filling ratio to the grinding chamber: 80%) were charged into a bead mill ("Star Mill LMZ015 (model number)", manufactured by Ashizawa Finetech Co., Ltd.) that can be operated in circulation, and grinding was performed for 60 minutes to obtain a complex slurry, while circulating between the reaction tank and the grinding chamber under the conditions of pump flow rate: 550 mL/min, peripheral speed: 8 m/s, and mill jacket temperature: 20 °C.
Then, the obtained complex slurry was immediately dried under vacuum at room temperature (23 °C) to obtain a powdered complex.
The obtained complex was dried at 110 °C under reduced pressure for 6 hours to obtain an amorphous complex degradate. Next, by heating under reduced pressure at 160 °C for 2 hours, a crystalline complex degradate (1) was obtained.
The crystalline complex degradate (1) had crystallization peaks at 2$\theta$ = 20.2° and 23.6° in the X-ray diffraction spectrum, which confirmed possession of a thio-LISICON Region II-type crystal structure.
35 g of crystalline complex degradate (1), 220 g of toluene, and 35 g of diisopropyl ether (relative permittivity at 25 °C: 3.8) were placed in a 1 liter reaction tank equipped with stirring blades. The stirring blade was rotated, and then using a circulation operable bead mill (trade name: Star Mill LMZ015, by Ashizawa Finetech Ltd.), the grinding treatment was performed for 1 hour at peripheral speed of 12 m/s, and for 10 minutes at a peripheral speed of 4 m/s, under predetermined condition (bead material: zirconia, bead diameter: 0.3 mm$\varphi$, amount used of beads; 456 g, pump flow rate: 650 mL/min, mill jacket temperature: 10 °C). The resultant slurry was dried in vacuum (room temperature: 23 °C) to obtain a white powder of an amorphous solid electrolyte. The obtained sample was dried in vacuum (room temperature: 23 °C) to obtain an amorphous solid electrolyte. Next, this was heated at 180°C under reduced pressure for 2 hours to obtain a crystalline solid electrolyte.

(Comparative Example 1)

Various measurements were performed using the crystalline complex degradate (1) obtained in Example 1 as a comparison object.

(Comparative Example 2)

A crystalline solid electrolyte was obtained in the same manner as in Example 1, except that only 255 g of toluene was used instead of 220 g of toluene and 35 g of diisopropyl ether.

(Comparative Example 3)

A crystalline solid electrolyte was obtained in the same manner as in Example 1, except that dibutyl ether (relative permittivity at 25 °C: 3.1) was used instead of diisopropyl ether.

Table 1 shows the specific surface area, average particle diameter (D50), content of complexing agent and oxygen atom-containing compound having a relative permittivity of 3.2 or higher at 25 °C, and ionic conductivity of each solid electrolyte.

Table 1

|  | Specific Surface Area ($m^2$/g) | Average Particle Diameter (D50) ($\mu$m) | Content of Complexing Agent (% by mass) | Content of Oxygen Atom-Containing Compound having a Relative Permittivity of 3.2 or higher (% by mass) | Ionic Conductivity (mS/cm) |
|---|---|---|---|---|---|
| Example 1 | 13 | 3.1 | 0.3 | 0.02 | 4.5 |
| Comparative example 1 | 32 | 4.1 | 1.0 | - | 4.1 |
| Comparative example 2 | 7 | 4.5 | 1.0 | - | 3.8 |
| Comparative example 3 | 14 | 3.8 | 0.3 | - | 4.3 |

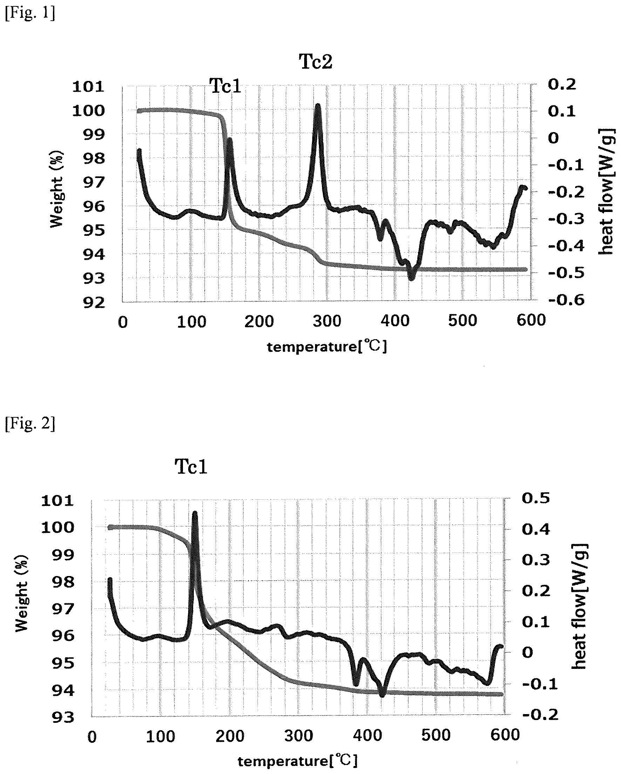

Further, DTA curves of the amorphous solid electrolytes obtained in Example 1 and Comparative Example 3 are shown in FIGS. 1 and 2, respectively.

From the results in Table 1, it can be confirmed that the crystalline solid electrolyte obtained in Example 1 has the highest ionic conductivity.

Furthermore, from a comparison of the DTA curves of the amorphous solid electrolytes obtained in Example 1 and Comparative Example 3, a clear crystallization exothermic peak (Tc2) indicating a phase transition from thio-LISICON Region II to another phase was observed only in Example 1 can be confirmed. This is because in the amorphous solid electrolyte obtained in Example 1, the phase transition from thio-LISICON Region II to another phase is suppressed in the temperature range of Tel or higher and Tc2 or lower, on the other hand, in the amorphous solid electrolyte obtained in Comparative example 3, it is presumed that a phase transition to the other phase occurs continuously in the temperature range of Tc1 or higher, and therefore, it is presumed that when exposed to high temperatures during the manufacturing process of an all-solid-state battery, the ionic conductivity decreases and the heat resistance is relatively low.

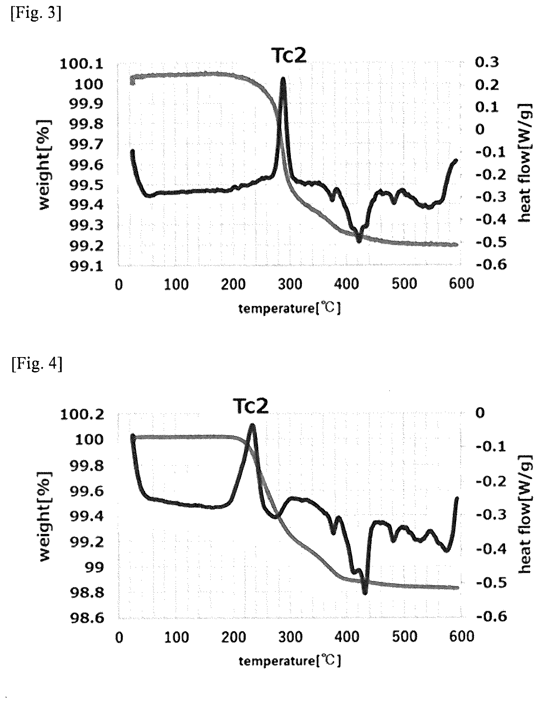

Furthermore, DTA curves of the crystalline solid electrolytes obtained in Example 1 and Comparative Example 3 are shown in FIGS. 3 and 4, respectively. From a comparison of the DTA curves of the crystalline solid electrolyte obtained in Example 1 and Comparative Example 3, the crystallization exothermic peak of the crystalline solid electrolyte obtained in Example 1 can be confirmed at 270 to 310 °C, and the phase transition from thio-LISICON Region II to another phase is suppressed below 270°C. On the other hand, the crystalline solid electrolyte obtained in Comparative example 3, the crystallization exothermic peak was confirmed at around 220 to 240 °C, and the phase transition from thio-LISICON Region II to another phase occurs. Therefore, it is presumed that the crystalline solid electrolyte obtained in Example 1 has higher thermal stability than the crystalline solid electrolyte obtained in Comparative Example 3 because the phase transition at high temperatures and the accompanying decrease in ionic conductivity are suppressed.

From the results of the above DTA curve, it is presumed that in Comparative Example 3, dibutyl ether easily dissolves lithium halide coordinated with a complexing agent, and uneven distribution occurs due to dissolution or precipitation of lithium halide , and the impurity phases are likely to be formed at relatively low temperatures. On the other hand, it is presumed that in Example 1, diisopropyl ether does not easily dissolve lithium halide coordinated with a complexing agent, and uneven distribution is less likely to occur due to dissolution or precipitation of lithium halide, and the impurity phase is not likely to be formed.

Industrial Applicability

In accordance with the present embodiment, a crystalline sulfide solid electrolyte having a high ionic conductivity and excellent in cell performance can be produced. The crystalline sulfide solid electrolyte obtained by the method of producing of the present embodiment is suitably used for batteries, especially batteries to be used for information-related instruments and communication instruments such as personal computers, video cameras, and mobile phones.

**Claims**

1. A method of producing a sulfide solid electrolyte comprising:

   mixing a raw material inclusion containing a lithium atom, a sulfur atom, a phosphorus atom, and a halogen atom, and a complexing agent having 2 or more of hetero atoms in the molecule to obtain an electrolyte precursor;
   performing grinding treatment of the electrolyte precursor in a solvent containing an oxygen atom-containing compound having a relative permittivity of 3.2 or higher at 25 °C to obtain a grinding treatment product; and
   removing the solvent from the grinding treatment product to obtain a sulfide solid electrolyte.

2. The method of producing a sulfide solid electrolyte according to claim 1,
   wherein the oxygen atom-containing compound is an ether compound.

3. The method of producing a sulfide solid electrolyte according to claim 2,
   wherein the ether compound is an aliphatic ether having a carbon number of 1 to 20.

4. The method of producing a sulfide solid electrolyte according to any one of claims 1 to 3,

   wherein the ether compound is represented by a general formula (1),

   $$R^1\text{-}O\text{-}R^2 \cdots \qquad (1)$$

   wherein $R^1$ and $R^2$ each independently represents a linear alkyl group having a carbon number of 1 to 20, a branched alkyl group having a carbon number of 3 to 20, or a cycloalkyl group having a carbon number of 5 to 20.

5. The method of producing a sulfide solid electrolyte according to claim 4,
   wherein $R^1$ and $R^2$ in the general formula (1) are the same group.

6. The method of producing a sulfide solid electrolyte according to any one of claims 1 to 5, further comprising:
   heating the electrolyte precursor.

7. The method of producing a sulfide solid electrolyte according to any one of claims 1 to 6, further comprising:
   heating the sulfide solid electrolyte.

8. The method of producing a sulfide solid electrolyte according to any one of claims 1 to 7,
   wherein the complexing agent is a compound having a tertiary amino group.

9. The method of producing a sulfide solid electrolyte according to any one of claims 1 to 8,
   wherein the solvent further contains a hydrocarbon compound.

10. The method of producing a sulfide solid electrolyte according to claim 9,
    wherein the solvent contains 50 to 99.5 % by mass of the hydrocarbon compound and 0.5 to 50 % by mass of the oxygen atom-containing compound.

11. A sulfide solid electrolyte comprising:

    a lithium atom;
    a sulfur atom;
    a phosphorus atom;and
    a halogen atom,

and comprising:

0.1 to 0.9 % by mass of a complexing agent having a number of hetero atoms in the molecule of 2 or more; and 0.01 to 0.5 % by mass of an oxygen atom-containing compound having a relative permittivity at 25 °C of 3.2 or higher.

12. The sulfide solid electrolyte according to claim 11, which exhibits a crystallization exothermic peak at 270 to 310 °C, as measured by differential thermal analysis (DTA).

13. The sulfide solid electrolyte according to claim 11 or 12,
wherein a specific surface area is 1 to 20 m$^2$/g, and an average particle diameter (D50) is 0.1 to 10 $\mu$m.

[Fig. 1]

[Fig. 2]

[Fig. 3]

[Fig. 4]

<table>
<tr><td colspan="2">**INTERNATIONAL SEARCH REPORT**</td><td>International application No.<br><br>**PCT/JP2022/030186**</td></tr>
</table>

**A.  CLASSIFICATION OF SUBJECT MATTER**

*H01B 13/00*(2006.01)i; *C01B 25/14*(2006.01)i; *H01B 1/06*(2006.01)i; *H01B 1/10*(2006.01)i
FI:  H01B13/00 Z; H01B1/06 A; H01B1/10; C01B25/14

According to International Patent Classification (IPC) or to both national classification and IPC

**B.  FIELDS SEARCHED**

Minimum documentation searched (classification system followed by classification symbols)

H01B13/00; C01B25/14; H01B1/06; H01B1/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | WO 2021/100874 A1 (IDEMITSU KOSAN CO., LTD.) 27 May 2021 (2021-05-27)<br>paragraphs [0031]-[0041], [0079], [0089], [0095], [0102]-[0110], claims | 1-13 |

☐ Further documents are listed in the continuation of Box C.  ☑ See patent family annex.

| | |
|---|---|
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **16 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/030186**

| Patent document cited in search report | | | Publication date (day/month/year) | Patent family member(s) | Publication date (day/month/year) |
|---|---|---|---|---|---|
| WO | 2021/100874 | A1 | 27 May 2021 | US 2022/0041444 A1 paragraphs [0050]-[0064], [0117], [0133], [0141], [0153]-[0160], claims DE 112020005721 T5 CN 114730651 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013020894 A
- JP 2017100907 A
- WO 2020105736 A
- WO 2020105737 A
- JP 2013016423 A

### Non-patent literature cited in the description

- Chemical Handbook. Maruzen Corporation, 2004
- **KANNO et al.** *Journal of The Electrochemical Society,* 2001, vol. 148 (7), A742-746
- *Solid State Ionics,* 2006, vol. 177, 2721-2725